# EUROPEAN PATENT SPECIFICATION

(11) **EP 0 934 480 B1**
(45) Date of publication and mention of the grant of the patent: **28.08.2002**
(21) Application number: 97912067.2
(22) Date of filing: 07.11.1997
(51) Int. Cl.: F16K 31/122

(54) **A VALVE ASSEMBLY**
VENTILEINRICHTUNG
ENSEMBLE SOUPAPE

(30) Priority: 07.11.1996 DK 125196
(43) Date of publication of application: 11.08.1999
(73) Proprietor: APV Fluid Handling Horsens A/S, 8700 Horsens (DK)
(72) Inventor: PETERSEN, Poul, Skadborg, DK-8740 Brädstrup (DK)
(74) Representative: Lichtenberg, Erik
(86) International application number: DK9700510
(87) International publication number: WO98020271

(56) References cited:
- EP-A- 0 177 620
- US-A- 3 115 330

## Description

### Technical Field

The invention relates to a valve assembly of the type described in the preamble to claim 1.

### Background Art

Such a valve assembly is partly known from EP patent No. 0.177.620 relating to a pressure medium operated valve with an actuator mounted thereon, but without an actual control unit, the pressure medium connectors communicating directly with the actuator, whereby an elaborate net of pressure medium connectors are required.

The applicant of the present invention has previously used a valve assembly which also comprises a control unit secured to the end of the actuator facing away from the valve by means of screws.

In addition to the pressure medium passage the control unit often comprises solenoid valves with coherent electrical wires having control signals introduced into the control unit.

When a valve assembly is to be serviced it is often necessary to remove the other process equipment from the valve assembly. It is thus necessary to disconnect the pressure medium supply and the electrical control signal wires. The pressure medium supply, which often is compressed air, is typically discontinued by dismounting and breaking off the hose, while the electrical signal is disconnected by dismounting the wires from a terminal board or by dismantling a plug.

### Brief Description of the Invention

The object of the present invention is to facilitate service of such valve assemblies.

This object is obtained by the valve assembly stated in the introduction being shaped in the manner described in the characterising part of claim 1.

The control unit with which the said process equipment, such as a pressure medium and electrical control signal wires, if any, are connected, is thus secured to the actuator by its coupling means engaging the coupling means of the actuator such that the this securing acts as a plug-in connection making it possible to separate the control unit from the actuator in a single grip. The process equipment is coherent with the control unit at the dismounting.

Moreover as stated in claim 1, the pressure medium connection communicates with the actuator by means of a branch/opening connection from the other end of the pressure medium passageway. Due to the non-rotational joining, a connection of this type can be performed quite simply by joining the control unit and the actuator in axial direction. Other embodiments of the connection may of course also be used for instance tubes fitting inside one another or openings in the control unit and in the actuator with sealing ring, e.g O-rings abutting one another. Such optional embodiments for axial joining connections are also covered by the invention.

As the control unit is not secured to the actuator by means of screws or the like, a reduced number of openings is used in the control unit in relation to prior art.

Finally as stated in the last paragraph of claim 1, the control unit also comprises a valve member which is only open when the control unit is connected to the actuator. When the control unit is separated from the actuator the valve member automatically closes the pressure medium passage, whereby the dismounting of a hose from the first end of the pressure medium passage is rendered superfluous.

In short it is very easy to mount or dismount the control unit by means of the coupling means and at the dismounting to automatically discontinue the pressure medium supply, e.g compressed air, and re-establish this at the mounting.

### Brief Description of the Drawings

The invention is explained in greater detail below with reference to the accompanying drawings, in which
Fig. 1 is a side view of a valve assembly according to the invention, partly in section,
Fig. 2 illustrates the control unit of the valve assembly and the uppermost portion of the actuator, the head hereof partly in cross-section, and the control unit being dismounted from the actuator,
Fig. 3 illustrates the same as Fig. 2, the control unit however connected with the actuator,
Fig. 4 illustrates a section along the line 4-4 in Fig. 2,
Fig. 5 is a perspective and top view of a union mounted on the control unit and contributing to the joining of the control unit and the actuator,
Fig. 6 is a perspective, sectional and enlarged view of the union in Fig. 5, and
Fig. 7 is a simplified picture of the union seen from above for illustrating the cam disc sections on the first ring and on the second ring, the rings, however, not being in the same plane.

### Best Mode for Carrying out the Invention

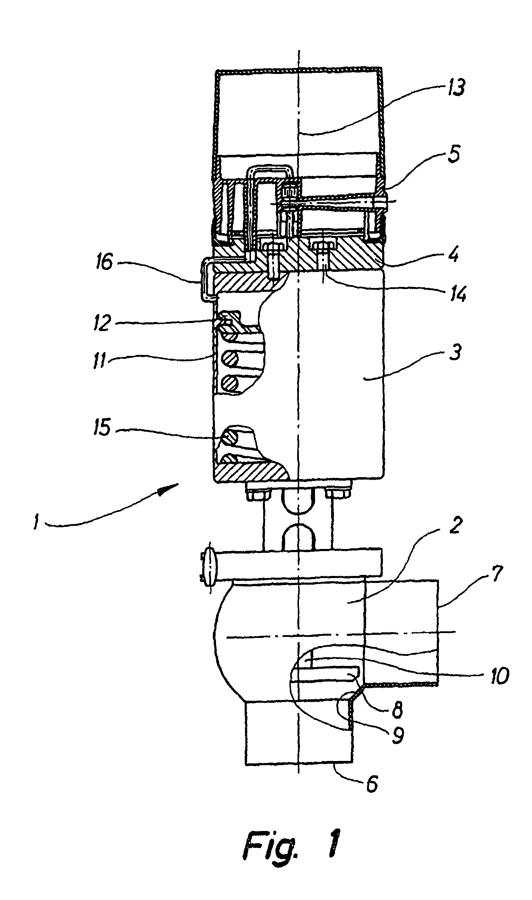

The valve assembly 1 shown in Fig. 1 is substantially formed of three parts, viz. a valve 2, an actuator 3 with a head 4 and a control unit 5.

The valve 2 serves for instance to conduct a fluid or a gas from a tube 6 to another tube 7. The valve 2 can be closed by means of a valve cone 8 which is made to abut a valve seat 9, the valve cone 8 communicating with a valve spindle 10. The actuator 3 is a cylinder 11 with a piston 12 whose axis 13 is co-axial with the valve spindle 10 mechanically connected to the piston 12. As a result the position of the valve cone 8 in relation to the valve seat 9 can be determined by means of the position of the piston 12 in the actuator 3.

The head 4 of the actuator 3 is secured to the end of the actuator 3 facing away from the valve 2 by means of bolts 14 and according to the invention is to be considered as a part of the actuator.

In the shown embodiment the piston 12 is moved upwards in the direction away from the valve 2 by means of a spring 15. The movement of the piston 12 toward the valve 2 for closure hereof is obtained by means of an air pressure supplied from the control unit 5 through a hose or a tube 16 as described in detail below.

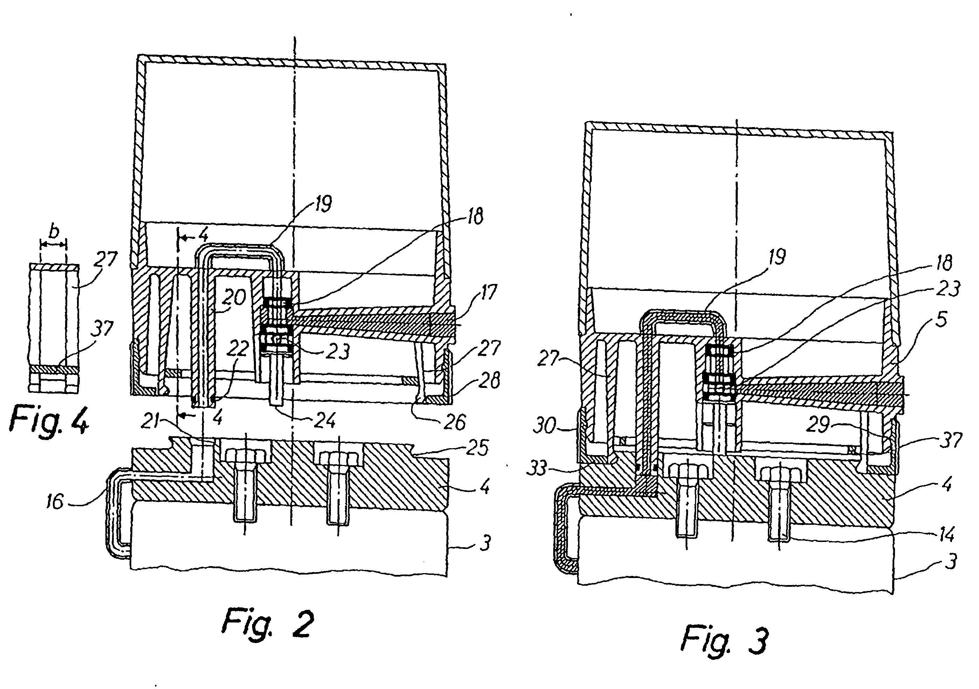

As illustrated in Fig. 3, in which the control unit 5 is shown mounted on the head 4 of the actuator 3, compressed air is supplied to a pressure medium passage 17 through a threaded hose (not shown), the inlet of the passage 17 provided on the side of the control unit 5. The compressed air is advanced through an open valve member 18 shown in Fig. 3 and subsequently via a tube 19 to a branch 20, the end thereof being inserted in pressure-proof state into an opening 21 in the head 4 of the actuator. The insertion of the branch 20 into the opening 21 is made pressure-proof by means of an O-ring 22. The opening 21 communicates with the tube 16 through a passage in the head 4 of the actuator, said tube leading to the actuator 3 on the side of the piston 12 opposite the spring 15.

In Fig. 3 the valve member 18 is open by a small hole 23 connecting the pressure medium passage 17 with the tube 19 through the interior of the valve member 18.

Fig. 2 illustrates the same as Fig. 3, although with the exception that the control unit 5 is removed from the head 4 of the actuator 4. As a result the valve member 18 is automatically closed, the valve member in the shown embodiment comprising two piston parts of different diameters which both are subjected to the pressure from the pressure medium passage 17. The major portion of the force against the two piston parts is applied in downward direction in Fig. 2, whereby the moveable parts of the valve member 18 and thus also the hole 23 are pushed downwards such that the valve member 18 remains closed. As illustrated in Fig. 2 the valve member 18 is provided with a projecting member 24 connected to the moveable part through the control unit. When the control unit changes from its dismounted position in Fig. 2 to its mounted position in Fig. 3 on the head 4 of the actuator 3, the projecting member 24 abuts the head 4 of the actuator and the valve member 18 is consequently pushed upwards against the force from the differential pressure on the two piston parts from the position shown in Fig. 2 to the position shown in Fig. 3, ie from its closed state to its open state. The valve member 18 can of course be kept closed by other means than a differential pressure, eg spring power or any other suitable force. Usually gravity cannot be used for keeping the valve member 18 closed in its dismounted position shown in Fig. 2, as the control unit 5 of the valve assembly not always faces as shown on Figs. 2 and 3.

On the head 4, which is the uppermost portion of the actuator 3, a circular, outwardly facing and circumferential groove 25 is provided and at the mounting of the control unit 5 is adapted to receive inwardly facing projections 26 provided on each of a number of finger portions 27 facing the actuator and secured to the control unit 5. In the present case the control unit is provided with a total of six finger portions evenly distributed along a circle being co-axial with the axis 13 as is the groove 25. Fig. 4 illustrates a finger portion 27 having inwardly facing projections 26. The approximate width b of the finger portion in relation to the its length is shown in this Fig.

Furthermore the control unit 5 is provided with a union 28 pivotally secured to the control unit 5, the union 28 having an inwardly projecting rim 29 pivotal in an outwardly facing groove 30 in the control unit 5.

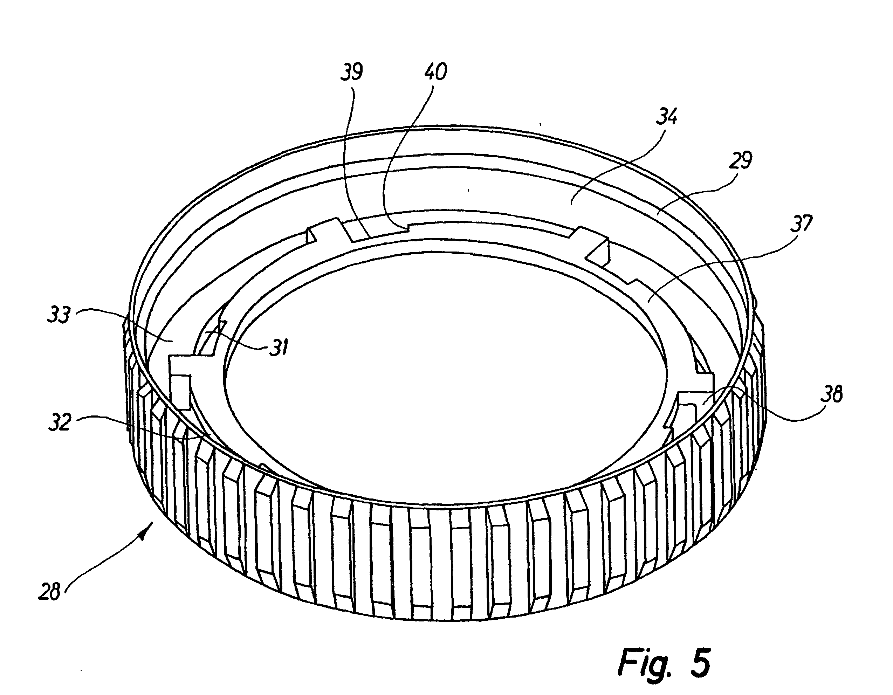

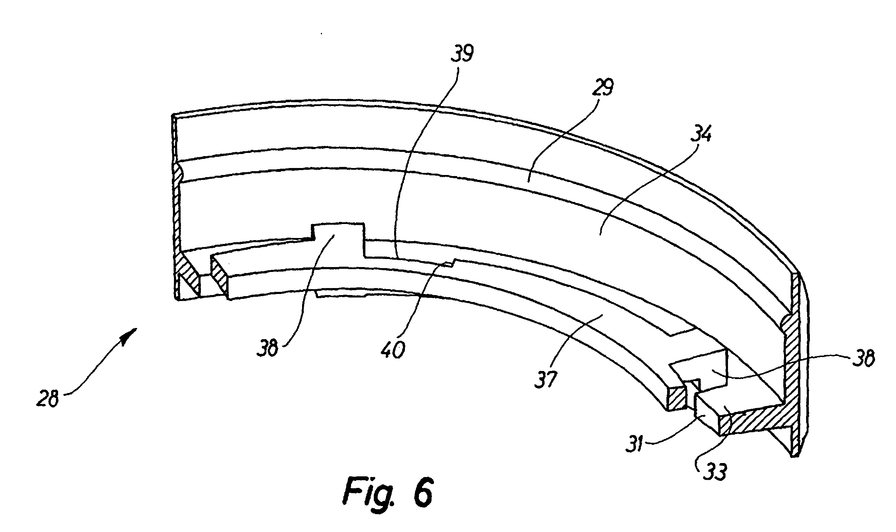

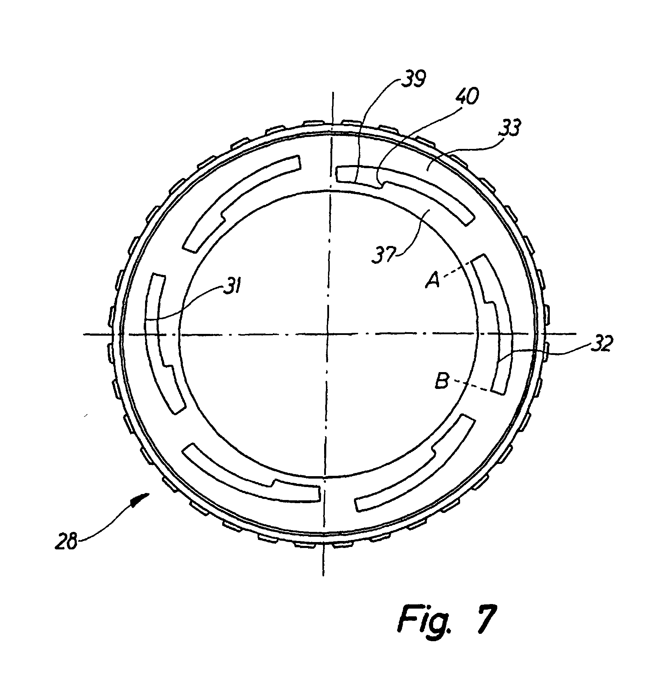

The union 28 is illustrated in detail in Fig. 5 showing the union 28 in perspective and in an inclined top view in relation to Figs. 2 and 3. Further a section of the union 28 is shown in an enlarged and perspective view in Fig. 6. As illustrated in Figs. 5 and 6 the union is provided with a first set of cam disc sections, the number of sections corresponding to the number of finger portions 27, ie in the shown example six cam disc sections 31, of which one extends from the point A to point B in Fig. 7. The cam disc sections 31 are arranged on the exterior of the finger portions 27 and extend thus inclined in relation to the finger portions 27 that when the union is turned in one direction, ie clockwise in Figs. 5, 6 and 7, said sections gradually force the finger portions 27 into the outwardly facing groove 25 of the actuator 3,4.

The union 28 is further provided with a second set of cam disc sections, the number of sections corresponding to the number of finger portions 27, ie in the present embodiment six cam disc sections 32 arranged inside the finger portions 27 and extend thus inclined relative to the finger portions 27 that when the union 28 is turned in the other direction, ie counter-clockwise in Figs. 5 and 6, said section gradually force the finger portions out of the outwardly facing groove 25 of the actuator 3,4.

In the shown embodiment, the first set of cam disc sections, ie the six cam disc sections 31, is provided on the inner face of a first ring 33, the outer face thereof being secured to the inner wall 34 of the union 28. The second set of cam disc sections 32 are provided on the outer face of a second ring 37 co-axially secured to the first ring 33. In the shown embodiment the second ring 37 is secured to the first ring 33 at positions between the ends of the individual cam disc sections 31,32 by means of connecting members 38. Thus, in the shown embodiment six such connecting members 38 are used. As a result when seen in the axis direction 13 the second ring 37 is arranged inside the projections 26 of the springy finger portions 27, while the first ring 33 substantially is arranged outside these projections 26.

A further groove 39 of a depth corresponding to the projection 26 of the finger portions 27 is provided on a length of those portions of cam disc sections 32 of the second ring 37 closest to the axis 13 of the union 28 in the inclined position, said length slightly exceeding the width b of each of the springy finger portions 27 of the control unit 5, thus providing a rim 40 or discontinuity in each of the cam disc sections 32 of the second ring 37.

The further grooves 39 stated above serve to facilitate the mounting of the union 28 on the control unit 5, the further grooves 39 causing the finger portions 27 with their inwardly facing projections 26 to be easily arranged on the second ring 37, at the same time as the finger portions 27 are arranged inside the first ring 33 at the corresponding point housing the further groove 39. The union 28 is then pushed deeper into the control unit 5, until its rim 29 engages the groove 30 of the control unit 5. It is not intended that the union 28 is to be removed from the control unit 5 at this point.

Prior to mounting the control unit 5 on the actuator 3, the union 28 is turned counter-clockwise as seen in Figs. 5-7 from the position in which the finger portions 27 are received in the grooves 39, whereby the finger portions 27 of the cam disc sections 32 of the second ring are gradually forced outwards as much as possible.

When the finger portions 27 are thus positioned, the control unit 5 may be arranged easily on the head 4 of the actuator 3 in the position thereof, in which the branch 20 engages the opening 21. During this operation the projecting member 24 of the valve member 18 is made to abut the head 4, whereby the valve member 18 is opened.

The union 28 is then turned clockwise, whereby the cam disc sections 31 of the first ring 33 are made to abut the outer face of the finger portions 27 and push these toward the groove 25 such that the inwardly facing projections 26 of the finger portions 27 are brought into locking engagement in the groove 25. As a result the pressure medium (in the shown embodiment compressed air) has access from the passage 17 through the valve member 18, the tube 19, the branch 20 and the opening 21 to the tube 16 and thus to the upper face or the face of the piston 12 opposite the spring 15. Thus in the shown embodiment the compressed air can be used for closing the valve 2. Conversely if the compressed air is interrupted at a point before the valve assembly, viz in a circuit outside the assembly, the valve 2 is opened due to the pressure of the spring 15 against the piston 12.

Although such an example is not shown the control unit 5 may of course comprise for instance solenoid valves forming part of the connection through the tube 19 such that the compressed air can be interrupted in this tube 18, whereby the valve 2 is opened. Such solenoid valves with their coherent control wires inserted through the housing of the control unit 5 may be arranged in a conventional manner in the control unit 5. The solenoid valves can further via tube connections divert the compressed air to the lower face of the piston in an in itself known manner such that the valve 2 can be opened or closed by means of the air pressure controlled by such a solenoid valve.

When the control unit arranged in a system comprising the valve assembly according to the invention is to be dismounted, the union 28 is merely turned counter-clockwise, whereby the cam disc sections 32 of the second ring 37 gradually force the finger portions 27 out of the groove 25 of the actuator 3,4 at the same time as the cam disc sections 31 of the first ring 33 are moved further away from the finger portions 27. The finger portions 27 and their inwardly facing projections 26 are thus released from the grooves 25 and the control unit 5 can be removed easily at the same time as its valve member 18 automatically shuts off the compressed air.

## Claims

1. A valve assembly (1) comprising a pressure medium operated valve (2) having a valve spindle (10) communicating with a valve cone (8), an actuator (3,4) connected to the valve (2), said actuator being a cylinder (11) with a piston (12) communicating with the valve spindle (10) and a control unit (5) mounted on the end of the actuator (3,4) facing away from the valve (2) for supplying pressure medium for movement of the piston (12) of the actuator (3,4) against spring power or any other power from a normal position, in which the valve (2) is optionally opened or closed, to the opposite position, in which the valve (2) is closed or opened, the control unit (5) comprising a pressure medium passage (17) having a first end for supplying a pressure medium,
**characterised in that**
- the control unit (5) is provided with coupling means (26,27) on the end facing the actuator for releasable connection with coupling members (25) on the actuator (3,4) at axial, non-rotational joining with the actuator (3,4).
- a second end of the pressure medium passage (17) ending in a branch (20) or opening for pressure medium tight connection with an opening (21) or a branch respectively in the actuator (3,4) at the joining and
- a usually closed valve member (18) is inserted into the pressure medium passage (17) having a member (24) connected to the moveable part of the valve member and projecting through the control unit (5), the outer end of said member abutting the actuator (3,4) at the joining, whereby the valve member (18) is opened, for instance against the force from a spring or against differential pressure.

2. A valve assembly as claimed in claim 1, **characterised in that** the coupling means (26, 27) on the control unit (5) comprises a number of springy finger portions (27) directed towards the actuator in the joining direction and provided with inwardly facing projections (26) at each end, said finger portions (27) being evenly distributed along a circle so as to enable the engagement of the projections (26) with a circular, outwardly facing groove (25) or parts hereof on the adjacent side of the actuator (3,4).

3. A valve assembly as claimed in claim 2, **characterised in that** the control unit (5) is provided with a union (28) pivotally arranged on the finger portions (27) and having a first set of cam disc sections (31) of a number corresponding to the number of finger portions (27), said sections arranged on the exterior of the finger portions (27) and each extending thus inclined in relation to the finger portions (27) that when the union (28) is turned in one direction they gradually force the finger portions (27) into the outwardly facing groove (25) of the actuator (3,4) or parts thereof.

4. A valve assembly (1) as claimed in claim 3, **characterised in that** the union (28) further is provided with a second set of cam disc sections (32) of a number corresponding to the number of finger portions (27), said sections arranged inside the finger portions (27) and each extending thus inclined in relation to the finger portions (27) that when the union (28) is turned in the other direction they gradually force the finger portions (27) out of the outwardly facing groove (25) of the actuator (3,4) or parts thereof.

5. A valve assembly as claimed in claim 3 or 4, **characterised in that** the union (28) is pivotally secured to the control unit (5) by means of a rim/groove connection (29,30).

6. A valve assembly as claimed in claim 3 or 4, **characterised in that** the first set of cam disc sections (31) is provided on the inner face of a first ring (33), the outer face of which being secured to the inner wall (34) of the union (28), and that the second set of cam disc sections (32) is provided on the outer face of a second ring (37) being co-axially secured to the first ring (33) either on the inner wall (34) of the union (28) or on the first ring (33).

7. A valve assembly as claimed in claim 6, **characterised in that** the second ring (37) is secured to the first ring (33) at positions between the ends of the individual cam disc sections (31,32) by means of connecting members (38) such that when seen in the axis direction (13) the second ring (37) is inside the projections (26) of the springy finger portions (27), while the first ring (33) is substantially outside these projections (26).

8. A valve assembly as claimed in claim 7, **characterised in that** a further groove (39) of a depth corresponding to the projection (26) of the finger portions (27) is provided on a length of those portions of the cam disc sections (32) of the second ring (37) closest to the axis of the union in the inclined position, said length slightly exceeding the width(b)of each of the springy finger portions of the control unit, thus providing a rim (40) or discontinuity in each of the cam disc sections (32) of the second ring (37).

9. A valve assembly as claimed in any one of the preceding claims,
**characterised in that** the control unit (5) of the actuator is provided with six springy finger portions (27) and that the first ring (33) and the second ring (37) each has six cam disc sections (31,32).

## Patentansprüche

1. Ventilanordnung (1) mit einem druckmediumbetätigten Ventil (2), das eine mit einem Ventilkegel (8) in Verbindung stehende Ventilspindel (10) aufweist, einem mit dem Ventil (2) verbundenen Stellglied (3, 4), wobei das Stellglied ein Zylinder (11) mit einem mit der Ventilspindel (10) in Verbindung stehenden Kolben (12) ist, und einer an dem Ende des Stellgliedes (3, 4) von dem Ventil (2) wegweisend angebrachten Steuereinheit (5), um Druckmedium zur Bewegung des Kolbens (12) des Stellgliedes (3, 4) gegen eine Federkraft oder jede andere Kraft aus einer normalen Stellung, in welcher das Ventil (2) wahlweise geöffnet oder geschlossen ist, in die entgegengesetzte Stellung, in der das Ventil (2) geschlossen oder geöffnet ist, zu liefern, wobei die Steuereinheit (5) einen Druckmittelkanal (17) mit einem ersten Ende zum Liefern eines Druckmittels aufweist, **dadurch gekennzeichnet, daß**
- die Steuereinheit (5) an dem Ende, das dem Stellglied zugewandt ist, mit Kopplungsmitteln (26, 27) ausgestattet ist, die zur lösbaren Befestigung an Kopplungskomponenten (25) an dem Stellglied (3, 4) in einer axialen, nicht drehenden Verbindung mit dem Stellglied (3, 4) dienen,
- ein zweites Ende des Druckmediumkanals (17) in einem Zweig (20) oder einer Öffnung zur druckmediumdichten Verbindung mit einer Öffnung (21) bzw. einem Zweig in dem Stellglied (3, 4) an der Verbindung endet und
- eine normalerweise geschlossene Ventilkomponente (18) in den Druckmediumkanal (17) eingesetzt ist, die eine mit dem bewegbaren Teil der Ventilkomponente verbundene und durch die Steuereinheit (5) vorstehende Komponente (24) aufweist, wobei das äußere Ende der Komponente an der Verbindung gegen das Stellglied (3, 4) stößt, wodurch die Ventilkomponente (18), z.B. gegen die Kraft von einer Feder oder gegen eine Druckdifferenz, geöffnet wird.

2. Ventilanordnung nach Anspruch 1, **dadurch gekennzeichnet, daß** die Kopplungsmittel (26, 27) an der Steuereinheit (5) eine Anzahl federnder Fingerabschnitte (27) umfassen, die in der Verbindungsrichtung zu dem Stellglied hin gerichtet und an jedem Ende mit nach innen gewandten Vorsprüngen (26) versehen sind, wobei die Fingerabschnitte (27) gleichmäßig entlang eines Kreises verteilt sind, um das Ineingriffstehen der Vorsprünge (26) mit einer kreisförmigen, nach außen gewandten Aussparung (25) oder Teilen hiervon an der unmittelbar benachbarten Seite des Stellgliedes (3, 4) zu ermöglichen.

3. Ventilanordnung nach Anspruch 2, **dadurch gekennzeichnet, daß** die Steuereinheit (5) mit einem Verbindungsstück (28) ausgestattet ist, das drehbar an den Fingerabschnitten (27) angeordnet ist und einen ersten Satz von Kurvenscheibenabschnitten (31) von einer Anzahl aufweist, die der Anzahl der Fingerabschnitte (27) entspricht, wobei die Abschnitte an der Außenseite der Fingerabschnitte (27) angeordnet sind und jeweils in Bezug auf die Fingerabschnitte (27) so schräg verlaufen, daß sie, wenn das Verbindungsstück (28) in eine Richtung gedreht wird, die Fingerabschnitte (27) allmählich in die nach außen gewandte Aussparung (25) des Stellgliedes (3, 4) oder Teile davon drücken.

4. Ventilanordnung (1) nach Anspruch 3, **dadurch gekennzeichnet, daß** das Verbindungsstück (28) ferner mit einem zweiten Satz von Kurvenscheibenabschnitten (32) von einer Anzahl ausgestattet ist, die der Anzahl der Fingerabschitte (27) entspricht, wobei die Abschnitte innerhalb der Fingerabschnitte (27) angeordnet sind und jeweils in Bezug auf die Fingerabschnitte (27) so schräg verlaufen, daß sie, wenn das Verbindungsstück (28) in die andere Richtung gedreht wird, die Fingerabschnitte (27) allmählich aus der nach außen gewandten Aussparung (25) des Stellgliedes (3, 4) oder Teilen davon herausdrücken.

5. Ventilanordnung nach Anspruch 3 oder 4, **dadurch gekennzeichnet, daß** das Verbindungsstück (28) mittels einer Vorsprung/Nut-Verbindung (29, 30) drehbar an der Steuereinheit (5) befestigt ist.

6. Ventilanordnung nach Anspruch 3 oder 4, **dadurch gekennzeichnet, daß** der erste Satz von Kurvenscheibenabschnitten (31) an der Innenfläche eines ersten Ringes (33) vorgesehen ist, dessen Außenfläche an der Innenwand (34) des Verbindungsstückes (28) befestigt ist, und daß der zweite Satz von Kurvenscheibenabschnitten (32) an der Außenfläche eines zweiten Ringes (37) vorgesehen ist, der koaxial mit dem ersten Ring (33) entweder an der Innenwand (34) des Verbindungsstückes (28) oder an dem ersten Ring (33) befestigt ist.

7. Ventilanordnung nach Anspruch 6, **dadurch gekennzeichnet, daß** der zweite Ring (37) an dem ersten Ring (33) an Stellen zwischen den Enden der einzelnen Kurvenscheibenabschnitte (31, 32) mit Hilfe von Verbindungskomponenten (38) so befestigt ist, daß der zweite Ring (37), wenn in die Achsenrichtung (13) gesehen, innerhalb der Vorsprünge (26) der federnden Fingerabschnitte (27) ist, während der erste Ring (33) im wesentlichen außerhalb dieser Vorsprünge (26) ist.

8. Ventilanordnung nach Anspruch 7, **dadurch gekennzeichnet, daß** eine weitere Aussparung (39) einer Tiefe, die dem Vorsprung (26) der Fingerabschnitte (27) entspricht, an einer Länge von denjenigen Bereichen der Kurvenscheibenabschnitte (32) des zweiten Ringes (37) vorgesehen ist, die sich am nächsten zu der Achse des Verbindungsstückes in der schrägen Position befinden, wobei die Länge die Breite (b) von jedem der federnden Fingerabschnitte der Steuereinheit leicht übersteigt und somit einen Rand (40) oder eine Unstetigkeit in jedem der Kurvenscheibenabschnitte (32) des zweiten Ringes (37) schafft.

9. Ventilanordnung nach einem der vorhergehenden Ansprüche, **dadurch gekennzeichnet, daß** die Steuereinheit (5) des Stellgliedes mit sechs federnden Fingerabschnitten (27) versehen ist, und daß sowohl der erste Ring (33) als auch der zweite Ring (37) sechs Kurvenscheibenabschnitte (31, 32) hat.

## Revendications

1. Ensemble de soupape (1) comportant une soupape actionnée par fluide sous pression (2) ayant une broche de soupape (10) qui communique avec un cône de soupape (8), un dispositif d'actionnement (3, 4) relié à la soupape (2), ledit dispositif d'actionnement étant un cylindre (11) avec un piston (12) qui communique avec la broche de soupape (10) et une unité de commande (5) montée sur l'extrémité du dispositif d'actionnement (3, 4) orienté à l'écart de la soupape (2) afin de délivrer du fluide sous pression pour un mouvement du piston (12) du dispositif d'actionnement (3, 4) à l'encontre de la force de ressort ou n'importe quelle autre force depuis une position normale, dans laquelle la soupape (2) est de manière optionnelle ouverte ou fermée, jusqu'à la position opposée, dans laquelle la soupape (2) est fermée ou ouverte, l'unité de commande (5) comportant un passage de fluide sous pression (17) ayant une première extrémité destinée à délivrer un fluide sous pression, **caractérisé en ce que**
- l'unité de commande (5) est pourvue de moyens d'accouplement (26, 27) sur l'extrémité face au dispositif d'actionnement pour un raccordement libérable avec des éléments d'accouplement (25) sur le dispositif d'actionnement (3, 4) au niveau d'une jonction axialement rotative avec le dispositif d'actionnement (3, 4),
- une deuxième extrémité du passage de fluide sous pression (17) se terminant dans un embranchement (20) ou s'ouvrant pour un raccordement étanche au fluide sous pression avec une ouverture (21) ou un embranchement respectivement dans le dispositif d'actionnement (3, 4) au niveau du raccordement et
- un élément de soupape habituellement fermé (18) est inséré dans le passage de fluide sous pression (17) ayant un élément (24) relié à la partie mobile de l'élément de soupape et dépassant à travers l'unité de commande (5), l'extrémité extérieure dudit élément butant contre le dispositif d'actionnement (3, 4) au moment du raccordement, de sorte que l'élément de soupape (18) est ouvert, par exemple à l'encontre de la force d'un ressort ou d'une pression différentielle.

2. Ensemble de soupape selon la revendication 1, **caractérisé en ce que** les moyens d'accouplement (26, 27) sur l'unité de commande (5) comportent plusieurs parties de doigt élastiques (27) orientées vers le dispositif d'actionnement dans la direction de raccordement et pourvues de saillies orientées vers l'intérieur (26) à chaque extrémité, lesdites parties de doigt (27) étant réparties de manière égale le long d'un cercle de façon à permettre l'engagement des saillies (26) avec une rainure circulaire orientée vers l'extérieur (25) ou des parties sur le côté adjacent du dispositif d'actionnement (3, 4).

3. Ensemble de soupape selon la revendication 2, **caractérisé en ce que** l'unité de commande (5) est pourvue d'un raccord (28) disposé de façon pivotante sur les parties de doigt (27) et ayant un premier ensemble de sections de disque de came (31) d'un nombre correspondant au nombre de parties de doigt (27), lesdites sections étant disposées sur l'extérieur des parties de doigt (27) et s'étendant chacune ainsi de manière inclinée par rapport aux parties de doigt (27) de telle sorte que, lorsque le raccord (28) est tourné dans un sens, elles forcent progressivement les parties de doigt (27) dans la rainure orientée vers l'extérieur (25) du dispositif d'actionnement (3, 4) ou de ses parties.

4. Ensemble de soupape (1) selon la revendication 3, **caractérisé en ce que** le raccord (28) est en outre pourvu d'un deuxième ensemble de sections de disque de came (32) d'un nombre correspondant au nombre de parties de doigt (27), lesdites sections étant disposées à l'intérieur des parties de doigt (27) et s'étendant chacune ainsi de manière inclinée par rapport aux parties de doigt (27) de telle sorte que, lorsque le raccord (28) est tourné dans l'autre direction, elles forcent progressivement les parties de doigt (27) hors de la rainure orientée vers l'extérieur (25) du dispositif d'actionnement (3, 4) ou de ses parties.

5. Ensemble de soupape selon la revendication 3 ou 4, **caractérisé en ce que** le raccord (28) est fixé de façon pivotante sur l'unité de commande (5) au moyen d'un raccordement à rebord/rainure (29, 30).

6. Ensemble de soupape selon la revendication 3 ou 4, **caractérisé en ce que** le premier ensemble de sections de disque de came (31) est prévu sur la face interne d'une première bague (33), dont la face externe est fixée sur la paroi interne (34) du raccord (28), et **en ce que** le deuxième ensemble de sections de disque de came (32) est prévu sur la face extérieure d'une deuxième bague (37) qui est fixée coaxialement sur la première bague (33) sur la paroi interne (34) du raccord (28) ou bien sur la première bague (33).

7. Ensemble de soupape selon la revendication 6, **caractérisé en ce que** la deuxième bague (37) est fixée sur la première bague (33) dans des positions entre les extrémités des sections de disque de came individuelles (31, 32) au moyen d'éléments de raccordement (38) de telle sorte que, lorsqu'elle est vue dans la direction de l'axe (13), la deuxième bague (37) est à l'intérieur des saillies (26) des parties de doigt élastiques (27), alors que la première bague (33) est sensiblement à l'extérieur de ces saillies (26).

8. Ensemble de soupape selon la revendication 7, **caractérisé en ce qu'**une autre rainure (39) d'une profondeur correspondant à la saillie (26) des parties de doigt (27) est prévue sur une longueur de ces parties des sections de disque de came (32) de la deuxième bague (37) plus proche de l'axe du raccord dans la position inclinée, ladite longueur dépassant légèrement la largeur (b) de chacune des parties de doigt élastiques de l'unité de commande, en procurant ainsi un rebord (40) ou une discontinuité dans chacune des sections de disque de came (32) de la deuxième bague (37).

9. Ensemble de soupape selon l'une quelconque des revendications précédentes, **caractérisé en ce que** l'unité de commande (5) du dispositif d'actionnement est pourvue de six parties de doigt élastiques (27) et **en ce que** la première bague (33) et la deuxième bague (37) possèdent chacune six sections de disque de came (31, 32).
